Europäisches Patentamt

European Patent Office

Office européen des brevets

(19)

(11) Numéro de publication: **0 052 063**
**A1**

## (12) DEMANDE DE BREVET EUROPEEN

(21) Numéro de dépôt: **81430030.7**

(22) Date de dépôt: **08.09.81**

(51) Int. Cl.³: **G 01 C 17/04**, G 04 B 47/06

(30) Priorité: **07.11.80 FR 8024086**

(43) Date de publication de la demande: **19.05.82**
**Bulletin 82/20**

(84) Etats contractants désignés: **BE CH DE GB IT LI**

(71) Demandeur: **Metni, Sami, 44, Bd. d'Italie, Monte Carlo (MC)**

(72) Inventeur: **Metni, Sami, 44, Bd. d'Italie, Monte Carlo (MC)**

(74) Mandataire: **Hautier, Jean-Louis et al, Cabinet Hautier Office Méditerranéen de Brevets d'Invention 24 rue Masséna, F-06000 Nice (FR)**

(54) **Montre boussole pour déterminer en un lieu quelconque du globe une direction et son procédé de fabrication pour isoler la boussole des parties métalliques.**

(57) L'invention a pour objet une montre boussole pour déterminer, en un lieu quelconque du globe, une direction et son procédé de fabrication pour isoler la boussole des parties métalliques.

Elle comporte une boussole (2) disposée coaxialement ou non aux aiguilles, contre le verre, sur la face de lecture et dans un boîtier indépendant (3) isolé magnétiquement des parties métalliques. Le boîtier indépendant comportant la boussole, est collé sous vide sur le verre de la montre, tout en étant chauffé à environ 180° C. La montre boussole comporte une plaque isolante (9) disposée entre le cadran (4) et le mécanisme (10) de la montre.

L'invention s'applique à tous les utilisateurs de montres ayant besoin de s'orienter sur mer, sur terre ou en avion.

EP 0 052 063 A1

ACTORUM AG

0052063

- 1 -

<u>Montre boussole pour déterminer en un lieu quelconque du globe une direction et son procédé de fabrication pour isoler la boussole des parties métalliques</u>

L'invention a pour objet une montre boussole pour déterminer la direction du Nord magnétique. Il existe déjà des montres boussoles qui n'ont, jusqu'ici connu aucun succès car ces boussoles indiquaient une direction fausse. Les boussoles sont mal isolées des autres parties métalliques, elles sont donc influencées et indiquent ainsi une autre direction que le Nord magnétique.

Ces montres boussoles connues ont pour principal défaut d'indiquer une direction fausse, soit si l'on change d'hémisphère par rapport à celui où la montre a été mise au point, soit si les calculs sont faux en ce qui concerne les azimuts, soit le plus souvent, si la boussole est fausse car mal isolée des autres parties métalliques.

De nombreuses montres boussoles ont fait l'objet de brevets d'invention, ces brevets n'ont jamais permis une application effective des montres boussoles. En effet, ces inventeurs n'ont jamais pu maîtriser une protection intégrale de la montre boussole, des effets magnétiques et stato-électriques émis par la montre, tels que les mouvements mécaniques ou électroniques ou d'autres effets provenant de l'extérieur tel que le réchauffement du verre plastique. Ces brevets, comme le brevet CH.A.328.78 DUMOULIN et le brevet GB.A.609.395 SQUARE D CIE, ne décrivent aucun procédé ou dispositif pour isoler la boussole.

L'invention évite tous ces inconvénients. La montre boussole selon l'invention, est composée d'une boussole disposée coaxialement ou non aux aiguilles contre le verre, sur la face de lecture de l'heure, dans un boîtier indépendant isolé du reste de la montre. La montre boussole est équipée d'un verre minéral ou autre qui n'est pas conducteur d'électricité statique. La boîtier de la boussole est collé sur ledit verre tout en étant chauffé à 180° Celsius.

De manière à isoler la boussole des parties métalliques pour ne pas en subir l'influence, une plaque est disposée entre le cadran et le mécanisme de la montre, elle est composée d'un alliage doux, tel que environ 60 % de nickel, 35 % de fer doux et 5 % de zinc. La plaque isolante est chauffée à 380 °C tandis que l'alliage reçoit un courant électrique alternatif, puis la plaque isolante est refroidie très rapidement à environ -15° C, puis la plaque isolante ainsi traitée, est montée entre le mécanisme de la montre et le cadran.

Dans le cas d'une montre boussole pour mahométans, afin de leur permettre de déterminer en un lieu quelconque du globe, la direction de la Mecque face à laquelle ils doivent se trouver pour prier, la montre comporte un disque mobile portant un index, ledit disque est manoeuvré de manière à ce que l'index se trouve en regard de la position exprimée en minutes, de la ville où l'usager se trouve, ladite position où se trouve l'usager étant inscrite en minutes sur des tables utilisées avec la montre.

L'utilisateur regarde sa montre en la tenant bien horizontale, de manière à ce que l'aiguille de la boussole tourne librement puis il pivote sur lui-même pour que le Nord magnétique vienne en regard de l'index, c'est-à-dire en regard de la position expriméee en secondes, la direction de la Mecque est alors indiquée par l'axe six heures-midi ou l'axe de la flèche fixe qui est dans ce même axe.

0052063

- 3 -

Les dessins ci-joints donnés à titre d'exemple indicatif et non limitatif permettront aisément de comprendre l'invention, ils représentent un mode de réalisation de l'invention particulièrement adapté aux mahométans.

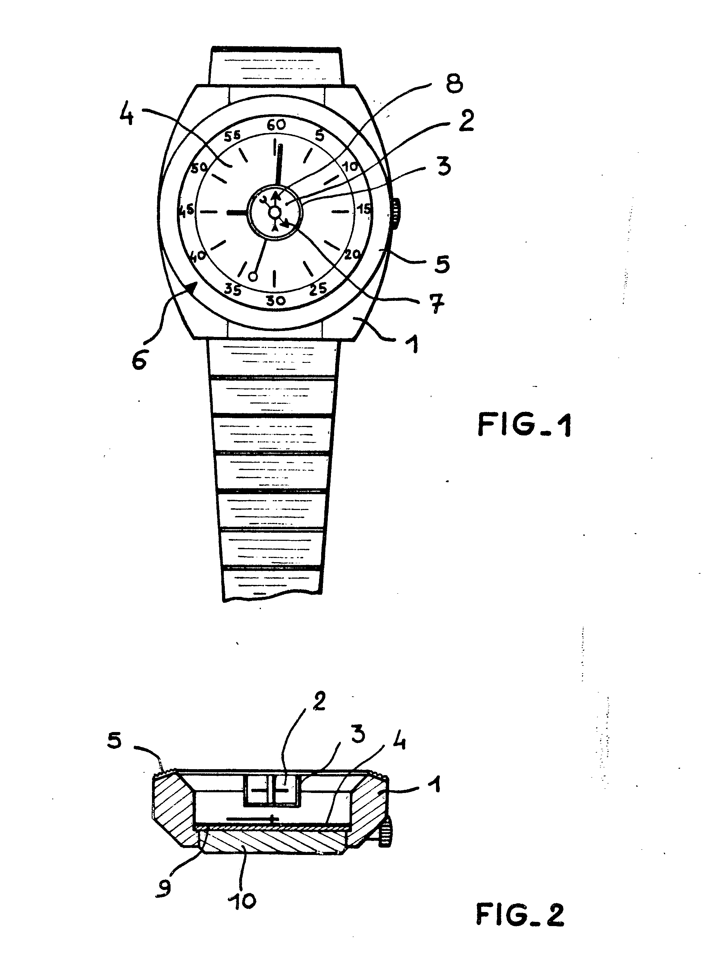

La figure 1 est une vue en perspective de la montre boussole ; la figure 2 est une vue en coupe de la montre boussole.

La montre 1 comporte une boussole 2 disposée coaxialement aux aiguilles, dans un boîtier 3 indépendant et isolé magnétiquement. La cadran 4 de la montre 1 comporte les graduations habituelles en minutes, d'une à soixante minutes. La montre 1 comporte un disque mobile 5 extérieur, manoeuvrable à la main, mais qui peut, bien entendu, être manoeuvré par un bouton. Ce disque mobile 5 comporte un index 6. L'utilisateur positionne cet index 6 sur la ville où il est, ou celle qui est la plus proche de celle indiquée sur des tableaux ou listes et dans lesquels est indiqué en minutes, l'azimut magnétique du lieu géographique.

L'utilisateur regarde sa montre bien en face dans un plan horizontal pour que l'aiguille 7 de la boussole soit bien libre sur son axe. Il tourne alors sur lui-même pour que la flèche indiquant le Nord magnétique se trouve en face de l'index 6. La direction de la Mecque est alors indiquée, soit par l'axe midi-six heures, soit par la flèche fixe 8. La plaque isolante 9 est disposée entre le cadran 4 et le mécanisme 10 de la montre. Ladite plaque isolante 9 est traitée selon le procédé décrit plus haut.

Bien entendu, cette montre boussole peut être adaptée à la randonnée en montagne, à la plongée sous-marine etc... Dans ce cas elle pourra porter des indications propres à chaque discipline. Ladite montre peut également être utilisée dans les trois corps d'armée : marine, aviation et terre puisqu'elle est très fiable.

Revendications de brevet

1. Montre boussole pour déterminer en un lieu quelconque du globe une direction et son procédé pour isoler la boussole des parties métalliques utilisant un disque mobile, caractérisée par le fait qu'elle comporte une boussole (2) disposée coaxialement aux aiguilles contre le verre, sur la face de lecture et dans un boîtier indépendant (3) isolé magnétiquement des parties métalliques.

2. Montre boussole selon la revendication 1 caractérisée par le fait que le boîtier (3) indépendant, comportant la boussole, est collé sous vide sur le verre de la montre, tout en étant chauffé à environ 180° C.

3. Montre boussole selon l'une quelconque des revendications 1 ou 2 caractérisée par le fait que le verre de la montre (1) est minéral ou autre pour ne pas être conducteur d'électricité statique.

4. Montre boussole selon l'une quelconque des revendications 1, 2 ou 3 caractérisée par le fait qu'elle comporte un disque mobile (4) portant un seul index (7).

5. Montre boussole selon l'une quelconque des revendications 1, 2, 3 ou 4 caractérisée par le fait qu'elle comporte une plaque isolante (9) disposée entre le cadran (4) et le mécanisme (10) de la montre.

6. Montre boussole selon l'une quelconque des revendications 1, 2, 3, 4 ou 5 caractérisée par le fait que la plaque isolante est composée d'un alliage doux, tel que environ 60 % de nickel, 35 % de fer doux et 5 % de zinc.

7. Procédé pour traiter la plaque isolante (9) selon la revendication 6 caractérisé par le fait que ladite plaque isolante (9) est chauffée à environ 380° C, tandis que l'alliage reçoit un courant électrique alternatif, puis la plaque isolante est refroidie très rapidement à environ -15° C, la plaque isolante ainsi traitée est prête à être montée dans la montre (1).

FIG_1

FIG_2

**Office européen des brevets**

**RAPPORT DE RECHERCHE EUROPEENNE**

EP 81 43 0030

| Catégorie | Citation du document avec indication, en cas de besoin, des parties pertinentes | Revendica-tion concernée | CLASSEMENT DE LA DEMANDE (Int. Cl. 3) |
|---|---|---|---|
| | **DOCUMENTS CONSIDERES COMME PERTINENTS** | | |
| X | FR - A - 2 394 121 (S. METNI)<br>* Page 1, ligne 34 - page 2, ligne 1 * | 1,3-6 | G 01 C 17/04<br>G 04 B 47/06 |
| | -- | | |
| A | CH - A - 202 597 (HISSARLIAN-LAGOUTTE)<br>* Page 2, colonne de gauche * | 1 | |
| | ---- | | |

**DOMAINES TECHNIQUES RECHERCHES (Int. Cl. 3)**

G 01 C 17/02
          17/04
G 04 B 47/06
          43/00
G 01 C 25/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 15-02-1982 | DE BUYZER |

OEB Form 1503.1  06.78